Europäisches Patentamt

European Patent Office

Office européen des brevets

(11) Publication number: **0 301 702**
**A2**

## (12) EUROPEAN PATENT APPLICATION

(21) Application number: **88305813.3**

(22) Date of filing: **27.06.88**

(51) Int. Cl.4: **G02B 6/28**

(30) Priority: **30.07.87 GB 8718055**

(43) Date of publication of application:
**01.02.89 Bulletin 89/05**

(84) Designated Contracting States:
**DE FR IT NL**

(71) Applicant: **STC PLC**
**10, Maltravers Street**
**London, WC2R 3HA(GB)**

(72) Inventor: **Bricheno, Terry**
**Moorland View**
**Great Sampford Essex. CB10 2RG(GB)**
Inventor: **Fielding, Alan**
**55, The Crest**
**Sawbridgeworth Hertfordshire(GB)**
Inventor: **Day, Stephen**
**18, Westfield**
**Harlow Essex(GB)**

(74) Representative: **Laurence, Simon French et al**
**STC Patents West Road**
**Harlow Essex CM20 2SH(GB)**

(54) **Single mode star coupler.**

(57) A multiport coupler for single mode optical fibres employs an annular mixer guide (45) whose dimensions are chosen so that interference effects in the mixer produce for a single input a set of output spots registering with the ends of the output fibres (40). The fibres may be adiabatically tapered to smaller diameter (41) in order to increase their modal spot size and thereby increase the effective 'packing fraction' at the mixer.

EP 0 301 702 A2

## SINGLE MODE MULTIPORT COUPLERS

One application for single mode multiport couplers is as distributive components in optical fibre systems such as optical local area networks and data highways. In such a system a single mode multiport coupler may be employed as a "tree" coupler, by which term is meant a coupler with a single input port and a set of output ports between which an input signal is distributed. An alternative form of employment of such multiport couplers in such a system is as a "star" coupler, by which term is meant a device which either has a set of ports which function as both input and output ports, or has a first set of ports which function as input ports and a second set which function as output ports between which is distributed an input signal applied to any one of the input ports. In a star coupler with separate input and output ports the number of output ports is not necessarily the same as the number of input ports. Some of these optical systems require the use of examples of such distributive single mode multiport couplers which will distribute an input signal between a relatively large number of ports.

Such a multiport coupler may in principle be obtained by concatenating a set of 2 x 2 fused taper couplers, preferably with wavelength flattened responses, or of 3 x 3 fused taper couplers. (A preferred method of manufacturing such fused taper couplers is described for instance in GB 2 150 703B to which attention is directed.) In this manner, twelve 2 x 2 couplers may be used to form an 8 x 8 device or thirty-two 2 x 2 couplers used to form a 16 x 16 device. Because it is not possible to flatten the wavelength response of a 3 x 3 fused taper coupler, concatenating these devices is probably limited to 9 x 9. However, the problems associated with fabricating a 16 x 16 device, having regard to the number of 2 x 2 couplers from which it must be constructed, their splicing and their packaging, make it a clumsy, expensive component. Moreover it is difficult to conceive of fabricating a device with a greater number of ports, the next configuration possible being a 32 x 32 requiring 80 2 x 2 fused taper couplers.

An alternative approach is the mixer rod guide which has been successfully used for multimode couplers. In a reflective star version of such a multimode coupler all the fibres are coupled to one end of the mixer guide whose opposite end is made highly reflecting. In the alternative version, a transmissive type multimode coupler, there is a set of input fibres all coupled to one end of the mixer guide, while a set of output fibres is coupled to the opposite end, which is not made highly reflecting. Using a mixer guide for single mode fibre appears unattractive, when first considered, for at least two reasons. First, the insertion loss associated with the 'packing fraction', defined as the ratio of the area occupied by the combined fibre spots to the area of the mixer rod, for a device using standard single mode fibres would be prohibitively high. Second, a typical multimode fibre will guide hundreds of modes which, when launched into a mixer guide, will produce a uniform distribution of light at the output end. On the other hand, the single mode in monomode fibre, when launched into such a guide, excites a limited population of modes, which results in very poor uniformity at the output end of the mixer guide revealed as a coarse speckle pattern with preferential bright spots.

The present invention discloses how the problem of packing fraction can be substantially alleviated and the modal 'speckle' effects can be turned to advantage.

According to one aspect of the present invention there is provided an optical waveguide transmissive type multiport coupler having at least one input optical waveguide optically coupled with one end of a mixer waveguide, and having a set of output optical waveguides optically coupled with the other end of the waveguide, characterised in that said optical waveguides are single mode, that said mixer waveguide is annuler, and in that the length of the annular mixer waveguide, in proportion to its other dimensions, is chosen such that a wavelength exists for which light launched from said one optical waveguide into said one end of the annular mixer waveguide is incident upon said other end as a set of substantially isolated spots of substantially equal intensity regularly spaced around the annulus, the members of which set of spots are in optical registry with the proximal ends of members of the set of output single mode optical waveguides.

According to a further aspect of the present invention there is provided an optical waveguide reflex type multiport coupler having a set of optical waveguides optically coupled with one end of a mixer waveguide whose other end is highly reflecting, characterised in that said optical waveguides are single mode, that said mixer waveguide is annuler, and in that the length of the annular mixer waveguide, in relation to its other dimensions, is chosen such that a wavelength exists for which light launched from any one of the set of single mode optical waveguides into the mixer waveguide returns to that end, after relection at the other end, as a set of substantially isolated spots of substantially equal intensity regularly spaced around the annulus, the members of which set of spots are in optical registry with the proximal ends of the set of single mode optical waveguides.

There follows a description of a multiport coupler embodying the invention in a preferred form. The description refers to the accompanying drawings in which:

Figure 1 is a series of plots showing how the pattern of light intensity varies as a function of distance down an annular mixer guide when launched into that guide as a Gaussian spot at one sectorial position on its end face,

Figures 2 and 3 are photographs showing light intensity patterns resulting from two different lengths of mixer guide when illuminated under the conditions specified for the plots of Figure 1, and

Figure 4 is a schematic perspective view of the star coupler embodying the invention in a preferred form.

Before proceeding to a description of the mixer guide of the preferred coupler, attention will first be directed to the packing fraction problem presented by the use of typical single mode optical fibre waveguide developed for telecommunications use. Such a fibre typically has an OD of 125$\mu$m and a mode spot diameter of 10$\mu$m. This gives a ratio of about 1 : 150 for the area of the mode spot to that of the fibre. If such a fibre is adiabatically tapered to a smaller size by a drawing operation the mode spot size increases as the fibre OD is reduced. By the time the OD is reduced to about 50$\mu$m the spot size has increased to about 25$\mu$m. At this stage the light is still guided by the core cladding interface and is substantially unaffected by the refractive index of material surrounding the fibre. Below about 45$\mu$m OD the power has spread sufficiently to be significantly affected by the nature of the interface between the fibre and its surroundings, and if these surroundings are of lower refractive index, then this interface takes over the waveguiding function and tends at least temporarily to limit further spreading of the mode spot size.

Therefore the packing fraction of a conventional telecommunications fibre can be readily greatly increased by means of a taper to about 1 : 4 by drawing the fibres down to a diameter of about 50$\mu$m. Provided that the taper is adiabatic, this improvement in packing fraction is obtained without incurring any loss penalty, and such tapers can very readily be fabricated using the equipment and basic progressive stretching technique described in GB 2 150-703B in relation to the manufacture of fused taper couplers.

Attention will now be turned to the response of an annular mixer guide to the injection of a Gaussian spot of light normally into a portion of one of its end faces. The light will spread out as it travels down the guide such that after a distance z the spot size is given by

$$W = W_o((1 + \lambda^2 z^2 (\pi W_o^2 n))$$
Where $W_o$ is the spot size at z = 0
$\lambda$ is the wavelength, and
n is the refractive index

The half-angle divergence (in radians) of the beam is given by:

$$\phi = \lambda/(\pi W_o n)$$
Therefore, for a 25um spot of 1.3um wavelength light propagating in silica (n = 1.447) the beam divergence is 1.31°.

Initially the power will spread out around the annulus, and after a certain distance will begin to overlap back onto itself. Because the light originates from the same source it is coherent, and an interference pattern is created.

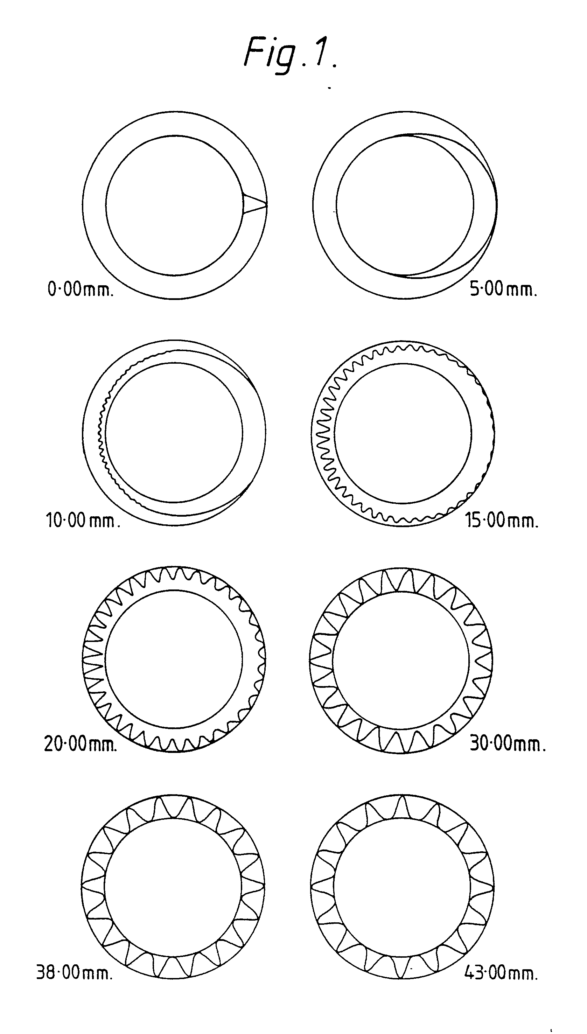

A computer program to model this propagation has been used to provide the plots of figure 1 which shows the predicted interference patterns for 1.3 $\mu$m wavelength light at 0.10mm and 20mm, 30mm, 39mm and 43mm along a mixer guide of 280$\mu$m OD with a 30$\mu$m wall thickness. The line contours represent the light intensity using a normalised scale and the inner ring as the zero level. At 30mm the first regular pattern with high contrast fringes appears and thereafter a high contrast regular pattern appears every few millimetres, the number of output spots gradually diminishing.

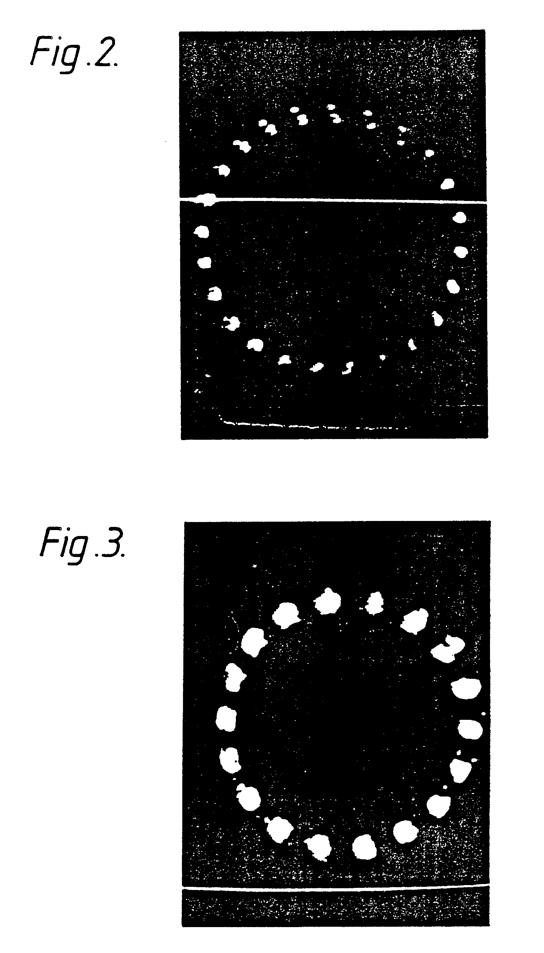

To see how well these predictions match what is found in practice two 280$\mu$m OD 30$\mu$m wall thickness silica mixer guides respectively 30 and 39mm. long were prepared. Light from a 1.3um emission wavelength laser was launched from a single mode fibre adiabatically tapered to 50um OD into one end of each of these mixers, and the outputs from the other end photographed using an infra-red vidicon to provide the photographs reproduced as Figures 2 and 3.

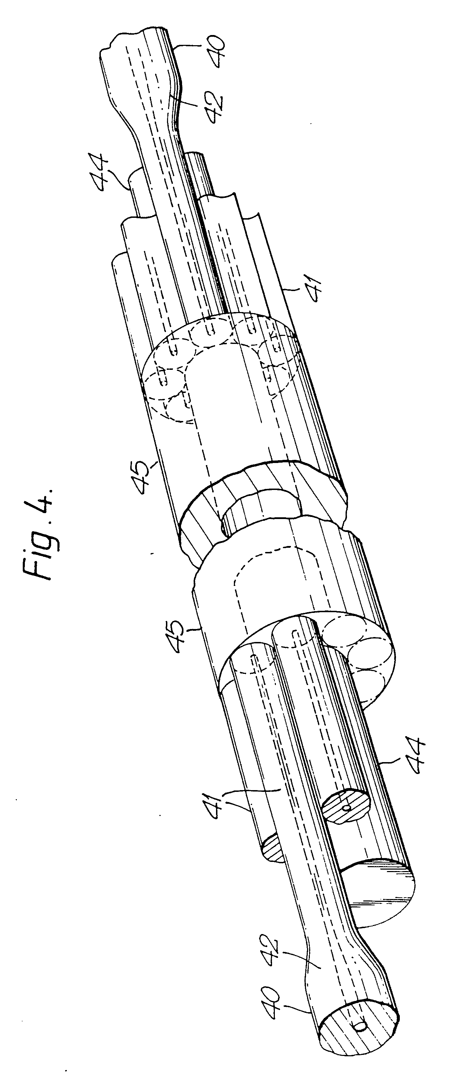

To form an 8 x 8 star coupler as schematically depicted in Figure 4 eight 125 $\mu$m OD fibres 40 are progressively stretched using the technique described in GB 2 150 703B to produce parallel-sided reduced diameter regions 41 of 50um OD. Between pairs of adiabatic tapers 42 these parallel-sided reduced diameter regions of the eight fibres are clamped around a silica former 44 which is dimensioned so that the fibres form a close packed array with the former, each fibre being aligned parallel with the former in line contact with its two immediate neighbours and with the former. The resulting sub-assembly is then glued together, sawn in half, and has its sawn ends polished.

The polished end of one sub assembly half is butted up against one end, the input end, of an annular mixer guide 45 of appropriate dimensions and is aligned so that when light is launched into the large diameter end of any one of its eight fibres, the input fibres, a pattern of eight spots of substantially equal intensity is generated at the other end, the output end, of the mixer guide. For 1.3 μm wavelength light launched into a mixer guide with an OD of 180 μm and a wall thickness of 50 μm the appropriate length of the mixer for producing the requisite eight-fold symmetry is 23mm. The other sub-assembly half is then butted up against this output end and its position adjusted to optimise the launching of the light from the mixer guide into the fibres of this second sub-assembly half with substantially equal excitation of each one of these fibres. Index matching adhesive is then applied to the interfaces between the mixer guide and the two sub-assembly halves. For mechanical and environmental protection the resulting assembly may be potted up in an enclosure using a silicone resin. Typically such resins have a higher refractive index than silica, in which care must be taken to provide a physical barrier to prevent the resin from contacting the mixer guide in order to prevent the potting resin from stripping the light from the mixer. This sort of problem can alternatively be avoided by use of a mixer guide provided with its own optical cladding surrounding an annular optical core. The region encircled by the optical core may then conveniently be composed of the same glass as that employed for the optical cladding surrounding the optical core. Thereby a solid cross-section mixer rather than an annular one is provided.

It will be appreciated that, since the operation of the multiport coupler is determined by interference effects, it is intrinsically wavelength sensitive. An indication as to the severity of its wavelength dependence is given by the calculation that the 16 spot pattern of Figure 1 (at 43mm from the input end) is essentially unchanged for wavelength shifts of 10nm from the design wavelength of 1.3 μm, whereas at 20nm the fringe visibility is approximately halved. Calculations also show that the operation of the device is comparatively insensitive to angular offsets of the launching beam by amounts up to two or three degrees of arc, and so angular sensitivity should present little practical problems since the sub-assembly of the fibres on their former can relatively readily be aligned to better than one degree.

Although the foregoing specific description has related to an 8 x 8 star coupler of the transmissive type it will be evident that by using only one of the sub-assembly halves cemented to an annular mixer guide of half the original length there is produced an equivalent reflective type of star coupler, provided that the other end of the mixer guide is provided with a high reflectivity coating.

It will also be apparent that by altering the OD, wall thickness and length of the mixer element and the OD of the fibres coupled to it, it is possible to construct a N x N star coupler where N is almost any relatively small integer. In this respect, although Figure 4 appears to represent the wall thickness of the mixer guide as being equal to the diameter of each fibre to which it is coupled, it is particularly to be noted that this relationship is not a requirement for the multiport coupler to work efficiently and there can be advantage in tailoring the wall thickness more closely to the spot size at least in certain circumstances

## Claims

1. An optical waveguide transmissive type multiport coupler having at least one input optical waveguide optically coupled with one end of a mixer waveguide, and having a set of output optical waveguides optically coupled with the other end of the mixer waveguide, characterised in that said optical waveguides are single mode, that said mixer waveguide is annuler, and in that the length of the annular mixer waveguide, in proportion to its other dimensions, is chosen such that a wavelength exists for which light launched from said one optical waveguide into said one end of the annular mixer waveguide is incident upon said other end as a set of substantially isolated spots of substantially equal intensity regularly spaced around the annulus, the members of which set of spots are in optical registry with the proximal ends of members of the set of output single mode optical waveguides.

2. A multiport coupler as claimed in claim 1 wherein the proximal ends of the members of the set of output single mode optical waveguides are equispaced around the axis of the annular mixer waveguide.

3. A multiport coupler as claimed in claim 2 which has the same number of input single mode optical waveguides as output single mode optical waveguides, the proximal ends of said input single mode optical waveguides also being equispaced around the axis of the annular mixer waveguide.

4. A multiport coupler as claimed in any preceding claim wherein the proximal ends of the set of output single mode optical waveguides are held in contact with a mandrel extending on the axis of the annular mixer waveguide.

5. A multiport coupler as claimed in claim 4 wherein the proximal end of the or each of the input optical waveguides is held in contact with a second mandrel also extending on the axis of the annular mixer waveguide.

6. An optical waveguide reflex type multiport coupler having a set of optical waveguides optically coupled with one end of a mixer waveguide whose other end is highly reflecting, characterised in that said optical waveguides are single mode, that said mixer waveguide is annular, and in that the length of the annular mixer waveguide, in relation to its other dimensions, is chosen such that a wavelength exists for which light launched from any one of the set of single mode optical waveguides into the mixer waveguide returns to that end, after reflection at the other end, as a set of substantially isolated spots of substantially equal intensity regularly spaced around the annulus, the members of which set of spots are in optical registry with the proximal ends of the set of single mode optical waveguides.

7. A multiport coupler as claimed in any preceding claim wherein each single mode optical waveguide has a region of relatively smaller diameter at its proximal end linked by an adiabatic taper with a region of relatively larger diameter at its distal end.

8. A multiport coupler as claimed in any preceding claim wherein the annular mixer waveguide is an unclad structure.

9. A multiport coupler as claimed in any claim of claims 1 to 7 wherein the annular mixer waveguide has an annular optical core bounded internally and externally with lower refractive index optical cladding material.

10. A multiport coupler as claimed in any preceding claim wherein the single mode optical waveguides are single mode optical fibre waveguides.

# Fig.1.

0·00mm.

5·00mm.

10·00 mm.

15·00mm.

20·00mm.

30·00mm.

38·00mm.

43·00mm.

Fig.2.

Fig.3.

EP 0 301 702 A2

Fig.4.

EP 0 301 702 A2